# EUROPÄISCHE PATENTANMELDUNG

(11) **EP 2 036 754 A2**
(43) Veröffentlichungstag der Anmeldung: **18.03.2009**
(21) Anmeldenummer: 08163961.9
(22) Anmeldetag: 09.09.2008
(51) Int. Cl.: B60J 7/22

(54) **Windschottanlage**

(30) Priorität: 10.09.2007 DE 102007044459
(71) Anmelder: Scambia Industrial Developments Aktiengesellschaft, 9494 Schaan (LI)
(72) Erfinder: Götz, Matthias, 71706, Markgröningen (DE); Nägele, Karl, 74321, Bietigheim-Bissingen (DE)
(74) Vertreter: Hoeger, Stellrecht & Partner Patentanwälte

(57) **Zusammenfassung**

Um den Bedienungskomfort der Windschottanlage umfassend ein an einer Karosserie (12) angeordnetes Windstoppelement (40), welches in einer Aufnahme (50) verstaubar ist, und welches in einer unwirksamen Stellung in die Aufnahme (50) eingefahren ist sowie in einer wirksamen Stellung aus der Aufnahme (50) ausgefahren ist, in welcher sich das Windstoppelement (40) hinter einer Sitzreihe (28) zwischen Seitenwänden (34) der Karosserie und über eine Gürtellinie (38) der Karosserie (12) erhebt, zu verbessern, wird vorgeschlagen, dass das Windstoppelement (40) zwischen zwei bezogen auf eine Längsrichtung der Karosserie (12) einander gegenüberliegend im Bereich von Seitenwänden (34) der Karosserie (12) angeordneten Führungen (32) geführt ist, dass jede der Führungen (32) jeweils eine in die Seitenwand (34) hineinbewegbare und aus der Seitenwand (34) nach oben über eine Gürtellinie (38) der Karosserie herausbewegbare Führungsstrebe (36) umfasst und dass eine das Windstoppelement (40) im Bereich eines oberen Endes (42) haltende Tragstrebe (72) längs der Führungen (32) zwischen einer eingefahrenen Stellung und einer nach oben über die Gürtellinie (38) ausgefahrenen und von den aus den Seitenwänden (34) herausbewegten Führungsstreben (36) geführten Stellung bewegbar ist.

## Beschreibung

Die Erfindung betrifft eine Windschottanlage umfassend ein an einer Karosserie eines Kraftfahrzeugs angeordnetes Windstoppelelement, welches in einer an der Karosserie gehaltenen Aufnahme verstaubar ist und welches in einer unwirksamen Stellung in die Aufnahme eingefahren ist sowie in einer wirksamen Stellung aus der Aufnahme ausgefahren ist, in welcher sich das Windstoppelement hinter einer Sitzreihe zwischen Seitenwänden der Karosserie und über eine Gürtellinie der Karosserie erhebt.

Derartige Windschottanlagen sind aus dem Stand der Technik bekannt. Bei diesen ist üblicherweise die Aufnahme als Gehäuse ausgebildet, welches im Kraftfahrzeug hinter der Sitzreihe angeordnet ist und aus welchem das Windstoppelement ausziehbar ist.

Eine derartige Windschottanlage hat jedoch einen begrenzten Bedienungskomfort.

Der Erfindung liegt die Aufgabe zugrunde, einen Bedienungskomfort der Windschottanlage zu verbessern.

Diese Aufgabe wird bei einer Windschottanlage der eingangs beschriebenen Art erfindungsgemäß dadurch gelöst, dass das Windstoppelement zwischen zwei bezogen auf eine Längsrichtung der Karosserie einander gegenüberliegend im Bereich von Seitenwänden der Karosserie angeordneten Führungen geführt ist, dass jede der Führungen jeweils eine in die Seitenwand hineinbewegbare und aus der Seitenwand nach oben über die Gürtellinie der Karosserie herausbewegbare Führungsstrebe umfasst und dass eine das Windstoppelement im Bereich eines oberen Endes haltende Tragstrebe längs der Führungen zwischen einer eingefahrenen Stellung und einer nach oben über die Gürtellinie ausgefahrenen und von den aus den Seitenwänden herausbewegten Führungsstreben geführten Stellung bewegbar ist.

Der Vorteil der erfindungsgemäßen Lösung ist somit darin zu sehen, dass durch die Anordnung der Führungen an den Seitenwänden der Karosserie und das Vorsehen von aus den Seitenwänden der Karosserie herausbewegbaren Führungsstreben als Teil der Führungen die Möglichkeit besteht, die Windschottanlage und insbesondere das Bewegen des Windstoppelements zwischen der eingefahrenen und der ausgefahrenen Stellung erheblich einfacher bedienbar zu gestalten und durch die an den Seitenwänden angeordneten Führungen auch eine relativ zur Karosserie stabile Führung des Windstoppelements zu erhalten.

Das Windstoppelement könnte sich dabei in seiner ausgefahrenen Stellung lediglich in einem Bereich oberhalb der Gürtellinie der Karosserie erstrecken. Besonders günstig ist es jedoch, wenn das Windstoppelement zwischen der Tragstrebe und der Aufnahme verläuft.

Um das Windstoppelement in einfacher Weise in der Aufnahme verstauen zu können, ist ferner vorzugsweise vorgesehen, dass das Windstoppelement eine an der Tragstrebe gehaltene biegeschlaffe Materialbahn umfasst.

Um ein Flattern, insbesondere in der ausgefahrenen Stellung des Windstoppelements zu vermeiden, ist vorzugsweise vorgesehen, dass sich in der ausgefahrenen Stellung das Windstoppelement zwischen der Tragstrebe und der Aufnahme gespannt erstreckt.

Um die Materialbahn gespannt zu halten, ist vorzugsweise vorgesehen, dass die Aufnahme mit einer Einzugseinrichtung versehen ist, welche das Windstoppelement in einem zwischen der Tragstrebe und der Aufnahme liegenden ausgezogenen Bereich aufgespannt erhält.

Hinsichtlich des Verstauens der Materialbahn in der Aufnahme wurden bislang ebenfalls keine näheren Angaben gemacht. So könnte das Windstoppelement gefaltet in der Aufnahme ablegbar sein.

So sieht eine günstige Lösung vor, dass die Materialbahn in der Aufnahme aufwickelbar ist.

In diesem Fall lässt sich auch die Einzugseinrichtung vorteilhaft dadurch gestalten, dass die Einzugseinrichtung eine Aufwickelvorrichtung für die Materialbahn darstellt, wobei die Aufwickelvorrichtung entweder motorisch angetrieben ist oder durch eine beim Ausfahren des Windstoppelements sich spannenden Feder gebildet ist, die somit ständig auf das Windstoppelement in Richtung eines Einziehens desselben in die Aufnahme wirkt.

Hinsichtlich der Ausbildung der Führungen und deren Montage an der Karosserie wurden bislang keine näheren Angaben gemacht.

So wäre es beispielsweise denkbar, die Führungen als an der Seitenwand der Karosserie abnehmbar befestigbare Führungen auszubilden.

Besonders günstig ist jedoch eine Lösung, bei welcher die Führungen in die Seitenwände der Karosserie integriert sind, so dass sich insbesondere eine optisch und auch funktionell vorteilhafte Lösung ergibt, die bezüglich der Führungen integraler Bestandteil der Karosserie ist und sich somit vom Bedienungskomfort her optimal in ein Fahrzeug integrieren lässt.

Zweckmäßigerweise sind dabei die Führungen durch Innenverkleidungen der Seitenwände abgedeckt und über einen Schlitz in diesen zugänglich, so dass sich die Führungen auch optisch unauffällig in die Seitenwände integrieren lassen.

Hinsichtlich des Bewegens der Tragstrebe von der eingefahrenen in die ausgefahrene Stellung wurden bislang keine näheren Angaben gemacht.

Beispielsweise wäre es denkbar, die Tragstrebe manuell in den Führungen bewegbar auszubilden.

Eine hinsichtlich des Bedienungskomforts besonders vorteilhafte Lösung sieht jedoch vor, dass die Tragstrebe durch einen Antrieb zwischen der eingefahrenen und der ausgefahrenen Stellung längs der Führungen bewegbar sind.

Ein derartiger Antrieb kann in unterschiedlichster Art und Weise ausgebildet und ausgeführt sein.

Beispielsweise wäre es denkbar, einen Spindelantrieb vorzusehen, welcher die Tragstrebe zwischen der eingefahrenen und der ausgefahrenen Stellung bewegt.

Eine andere Möglichkeit wäre, beispielsweise einen Seilzug vorzusehen, durch welchen die Tragstrebe zwischen der eingefahrenen und der ausgefahrenen Stellung bewegbar ist.

Als besonders einfach realisierbar hat sich jedoch eine Lösung erwiesen, bei welcher der Antrieb als Schubantrieb ausgebildet ist und ein längs einer Führungsbahn geführtes und längs dieser bewegbares Schubglied sowie einen auf dieses Schubglied wirkenden Vorschubantrieb umfasst.

Vorzugsweise ist dabei das Schubglied so ausgebildet, dass es quer zu seiner Längserstreckung bewegbar, jedoch in Richtung der Längserstreckung im Wesentlichen zug- und schubsteif ist.

Das Schubglied kann dabei in unterschiedlichster Art und Weise ausgebildet sein.

Eine vorteilhafte Lösung sieht vor, dass das Schubglied mindestens einen in Richtung seiner Längserstreckung verlaufenden Schubstrang aufweist.

Dabei kann der Schubstrang selbst in unterschiedlichster Art und Weise ausgebildet sein.

Beispielsweise könnte der Schubstrang durch einzelne, gelenkig miteinander verbundene Schubglieder ausgebildet sein.

Eine andere vorteilhafte Lösung sieht vor, dass der mindestens eine Schubstrang als zusammenhängender Schubkörper ausgebildet ist, der jedoch in Richtung quer zu seiner Längserstreckung beweglich ist.

Ein derartiger Schubkörper kann beispielsweise als sogenanntes Steigseil realisiert sein.

Um mit einem derartigen Schubstrang vorteilhafterweise eine Schubkraft ausüben zu können, ist vorzugsweise vorgesehen, dass der mindestens eine Schubstrang mit seinen schubkrafterzeugenden Abschnitten nur längs der Führungsbahn bewegbar geführt ist, so dass der Schubstrang nicht die Möglichkeit hat, quer zur Führungsbahn von dieser abzuweichen und somit nicht das Problem besteht, dass eine Schubkraftübertragung durch den Schubstrang durch ein Ausweichen desselben quer zur Führungsrichtung unterbrochen wird.

Die Führung des Schubstrangs längs der Führungsbahn kann in unterschiedlichster Art und Weise erfolgen.

Beispielsweise wäre es denkbar, den Schubstrang so auszubilden, dass dieser einen Führungssteg umfasst.

Eine besonders günstige Lösung sieht jedoch vor, dass die Führungsbahn durch eine Führungsaufnahme gebildet ist, in welcher der Schubstrang verläuft, so dass die Führungsaufnahme den Schubstrang so weit umfasst, dass dieser quer zur Führungsbahn nicht ausweichen kann.

Die Führungsbahn könnte so ausgebildet sein, dass sie einen stationären in der Karosserie verlaufenden Bahnabschnitt, einen fest in der Führungsstrebe angeordneten und mit dieser verfahrbaren Bahnabschnitt sowie einen bewegbaren Bahnabschnitt umfasst, mit welcher eine Verbindung zwischen dem stationären und dem verfahrbaren Bahnabschnitt herstellbar ist und der beim Einfahren der Führungsstreben quer zu seiner Längsrichtung bewegbar ist.

Bei der bislang beschriebenen Lösung wurde davon ausgegangen, dass mindestens ein Schubstrang für die Ausbildung des Schubglieds erforderlich ist.

Eine besonders günstige Lösung sieht jedoch vor, dass das Schubglied einen ersten und einen zweiten, jeweils längs einer Führungsbahn geführten Schubstrang aufweist.

Ein derartiges Schubglied bietet eine höhere Flexibilität bei der Übertragung der Schubkraft.

Dabei ist es jedoch zweckmäßig, wenn die Schubstränge des Schubglieds miteinander gekoppelt sind.

Eine derartige Kopplung der Schubstränge könnte beispielsweise durch einen sich längs der Schubstränge erstreckenden bandförmigen Körper erfolgen.

Eine zweckmäßige Lösung der Kopplung der Schubstränge sieht dabei vor, dass die Schubstränge durch ein an einer Stelle vorgesehenes Kopplungselement miteinander gekoppelt sind.

Ein derartiges Kopplungselement, welches zwischen den Schubsträngen wirksam ist, kann an einer geeigneten Stelle des Schubglieds eingesetzt werden.

Zweckmäßigerweise ist dabei das Kopplungselement in einem Bereich angeordnet, in welchem die Führungsbahnen in Richtung der Längserstreckung des Schubglieds überlappend angeordnet sind, das heißt, dass in dem Bereich, in dem das Kopplungselement angeordnet ist, jeder der Schubstränge längs einer Führungsbahn geführt ist.

Eine besonders günstige Realisierungsform eines Schubglieds sieht dabei vor, dass das Schubglied in einem ersten Längsabschnitt einen ersten Schubstrang und in einem zweiten Längsabschnitt einen zweiten Schubstrang umfasst, so dass die Möglichkeit besteht, das Schubglied entsprechend der zu übertragenden Schubkraft in einfacher Weise an die Einsatzbedingungen anzupassen.

Hinsichtlich der aus den Seitenwänden herausbewegbaren Führungsstreben wurden im Zusammenhang mit der bisherigen Erläuterung der erfindungsgemäßen Lösung keine näheren Angaben gemacht.

So sieht ein vorteilhaftes Ausführungsbeispiel vor, dass die Führungsstreben durch einen Antrieb aus den Seitenwänden über die Gürtellinie der Karosserie nach oben herausbewegbar sind.

Dieser Antrieb für die Führungsstreben kann grundsätzlich völlig unabhängig vom Antrieb der Tragstrebe sein.

Beispielsweise wäre es denkbar, die Führungsstreben durch einen Spindelantrieb aus den Seitenwänden heraus oder in diese hinein zu bewegen oder einen Seilzug vorzusehen.

Eine weitere Möglichkeit wäre, die Führungsstreben mit einer Verzahnung zu versehen und über ein diese Verzahnung eingreifendes angetriebenes Zahnrad zu bewegen.

Eine andere vorteilhafte Möglichkeit sieht vor, dass der Antrieb als Schubantrieb ausgebildet ist.

Dieser Schubantrieb könnte völlig unabhängig von dem Schubantrieb für die Tragstrebe ausgebildet sein, so dass ein Bewegen der Führungsstrebe unabhängig von dem Bewegen der Tragstrebe erfolgen könnte.

Eine besonders kostengünstige Lösung sieht jedoch vor, dass der Schubantrieb zum Bewegen der Tragstrebe und der Schubantrieb zum Ausfahren der Führungsstreben zu einem Schubantrieb mit einem Schubglied zusammengefasst sind.

In diesem Fall ist erfindungsgemäß vorgesehen, dass das Schubglied zwei längs Führungsbahnen geführte Schubstränge umfasst.

Wenn mit ein und demselben Schubantrieb sowohl die Tragstrebe als auch die Führungsstrebe bewegbar sein soll, ist vorzugsweise vorgesehen, dass der erste Schubstrang des Schubglieds längs einer stationär an der Karosserie angeordneten ersten Führungsbahn geführt ist.

Ferner ist zweckmäßigerweise vorgesehen, dass der zweite Schubstrang längs einer zweiten Führungsbahn geführt ist und dass die erste Führungsbahn und die zweite Führungsbahn im Wesentlichen in konstantem Abstand voneinander verlaufen, so dass in einfacher Weise eine Kopplung der beiden Schubstränge miteinander realisierbar ist.

Bei der Ausbildung der zweiten Führungsbahn ist dabei vorgesehen, dass der zweite Schubstrang zwischen einem stationär, an der Karosserie gehaltenen Bahnabschnitt der zweiten Führungsbahn und einem an der Führungsstrebe angeordneten bewegbaren Bahnabschnitt der zweiten Führungsbahn hin und her bewegbar ist, das heißt, dass der zweite Schubstrang zwischen den unterschiedlichen Bahnabschnitten der zweiten Führungsbahn hin und her bewegt ist.

Um den zweiten Schubstrang störungsfrei in den bewegbaren Bahnabschnitt einführen zu können und aus diesem herausführen zu können, ist vorzugsweise vorgesehen, dass der zweite Schubstrang bei in die Seitenwand hineinbewegter Führungsstrebe von dem stationären Bahnabschnitt der zweiten Führungsbahn in den an der jeweiligen Führungsstrebe angeordneten bewegbaren Bahnabschnitt der zweiten Führungsbahn und umgekehrt bewegbar ist.

Hierbei schließen vorzugsweise der stationäre Bahnabschnitt und der bewegbare Bahnabschnitt unmittelbar aneinander an, so dass der Führungsstrang zwischen beiden störungsfrei hin und her bewegt werden kann.

Ferner ist es bei dieser Lösung günstig, dass bei aus der Seitenwand der Karosserie nach oben über die Gürtellinie herausbewegter Führungsstrebe der zweite Schubstrang in dem an diesem vorgesehenen bewegbaren Bahnabschnitt der zweiten Führungsbahn geführt ist.

Um in diesem Fall eine optimale Übertragung von Schubkräften von dem ersten Schubstrang auf den zweiten Schubstrang zu erhalten, ist vorzugsweise vorgesehen, dass zwischen dem ersten Schubstrang und dem zweiten Schubstrang wirksame Kopplungselement so angeordnet ist, dass ein Angriffspunkt desselben am zweiten Schubstrang stets an einem in einem der Bahnabschnitte geführten Abschnitt des zweiten Führungsstrangs angreift, so dass der zweite Führungsstrang keine Möglichkeit hat, quer zu seiner Führungsbahn auszuweichen.

Hinsichtlich des Bewegens der Tragstrebe selbst wurden dabei keine näheren Angaben gemacht.

So sieht eine vorteilhafte Ausführungsform vor, dass die Tragstrebe an dem zweiten Schubstrang gehalten ist.

Damit bewegt der zweite Schubstrang die Tragstrebe von der eingefahrenen Position in die ausgefahrene Position und umgekehrt.

Zweckmäßigerweise ist dabei die Tragstrebe an einem Endbereich des zweiten Schubstrangs gehalten, so dass der Endbereich des zweiten Führungsstrangs ungefähr genauso weit über die Gürtellinie der Karosserie zu bewegen ist, wie die mit diesem verbundenen Tragstrebe.

Ferner wurde nicht näher darauf eingegangen, wie die Führungsstrebe aus der Seitenwand heraus oder in diese wieder hinein bewegt werden soll.

Hierzu ist zweckmäßigerweise vorgesehen, dass die Führungsstrebe durch einen der Schubstränge des Schubglieds mitbewegbar ist.

Dabei könnte dies der erste Schubstrang oder der zweite Schubstrang sein.

Besonders einfach lässt sich ein Mitbewegen der Führungsstrebe realisieren, wenn die Führungsstrebe durch den zweiten Schubstrang mitbewegbar ist.

Im einfachsten Fall ist dabei vorgesehen, dass die Führungsstrebe einen Anschlag aufweist, gegen den der zweite Schubstrang wirkt.

Zweckmäßigerweise ist dabei der Anschlag so angeordnet, dass auf diesen der Endbereich des zweiten Schubstrangs wirkt, der auch mit der Tragstrebe verbunden ist.

Um zu verhindern, dass beim Mitbewegen der Führungsstrebe durch einen der Schubstränge des Schubgliedes die Führungsstrebe zumindest in einer Bewegungsrichtung dem Schubstrang nicht zwingend folgt, ist vorzugsweise eine Haltevorrichtung vorgesehen, welche bei einem Mitbewegen der Führungsstrebe diese an dem die Führungsstrebe bewegenden Schubstrang fixiert.

Vorzugsweise ist dabei die Haltevorrichtung so ausgebildet, dass sie entsprechend der Position der Führungsstrebe relativ zur Seitenwand gesteuert ist.

Beispielsweise ist die Halteeinrichtung so ausgebildet, dass sie nach einem Bewegen der Führungsstrebe aus ihrer in die Seitenwand hineinbewegten Endstellung heraus die Führungsstrebe relativ zu dem Schubstrang fixiert.

Eine sichere Fixierung der Führungsstrebe an dem Schubstrang mittels der Halteeinrichtung sieht dabei vor, dass die Halteeinrichtung ein Formschlusselement aufweist, mit welchem diese an einem Formschlusskörper des Schubstrangs mit einem Formschlusselement angreifen kann, so dass die Führungsstrebe damit im Hinblick auf Bewegungen des Schubstrangs in Richtung der Längserstreckung derselben formschlüssig an diesem festlegbar ist.

Insbesondere ist es im Rahmen der erfindungsgemäßen Lösung vorteilhaft, wenn die Halteeinrichtung mit der Führungsstrebe mitbewegbar ist und entsprechend der Bewegung der Führungsstrebe durch Steuerelemente derart steuerbar ist, dass die Führungsstrebe in allen Stellungen außerhalb der vollständig eingefahrenen Stellungen durch die Halteeinrichtung an dem jeweiligen Schubstrang fixiert ist.

Ferner ist es vorteilhaft, wenn bei der erfindungsgemäßen Lösung sichergestellt ist, dass die Führungsstrebe in ihrer in die Seitenwand hineinbewegten Endstellung verbleibt.

Aus diesem Grund ist vorzugsweise eine Endeinzugseinrichtung vorgesehen, mit welcher die Führungsstrebe in ihrer in die Seitenwand hineinbewegten Endstellung relativ zur Seitenwand festlegbar ist.

Vorzugsweise ist dabei die Endeinzugseinrichtung als formschlüssige Endeinzugseinrichtung ausgebildet, welche kurz vor Erreichen der in die Seitenwand hineinbewegten Endstellung mit dieser eine formschlüssige Verbindung mit der Führungsstrebe herstellt und die Führungsstrebe in die Endstellung bewegt oder eine derartige Bewegung der Führungsstrebe unterstützt und außerdem die Führungstrebe in der Endstellung hält.

Im einfachsten Fall ist dabei die Endeinzugseinrichtung mit einem bistabilen Endeinzugskörper versehen, welcher in einer von zwei stabilen Stellung eine formschlüssige Verbindung mit der Führungsstrebe freigibt und in einer anderen von zwei stabilen Stellungen über eine formschlüssige Verbindung mit der Führungsstrebe die Führungsstrebe in Richtung der in die Seitenwand hineinbewegten Endstellung beaufschlagt und in dieser hält.

Hinsichtlich der Anordnung der Aufnahme an der Karosserie wurden bislang keine weiteren Angaben gemacht.

So könnte die Aufnahme lösbar an der Karosserie fixiert sein.

Besonders günstig ist es jedoch, wenn die Aufnahme in die Karosserie integriert ist, um somit eine Bedienung der Windschottanlage zu vereinfachen.

Ferner ist es vorteilhaft, wenn die Aufnahme nahe einem Fahrzeugboden der Karosserie angeordnet ist, um die Aufnahme möglichst wenig störend anzuordnen.

Weitere Merkmale und Vorteile der Erfindung sind Gegenstand der nachfolgenden Beschreibung sowie der zeichnerischen Darstellung einiger Ausführungsbeispiele der erfindungsgemäßen Lösung.

In der Zeichnung zeigen:
- Fig. 1: eine schematische Seitenansicht eines mit einer erfindungsgemäßen Windschottanlage ausgerüsteten Kraftfahrzeugs;
- Fig. 2 bis 9: eine Darstellung eines Ausfahrens des Windstoppelements eines ersten Ausführungsbeispiels einer erfindungsgemäßen Windschottanlage aus der eingefahrenen Stellung in die ausgefahrene Stellung, wobei

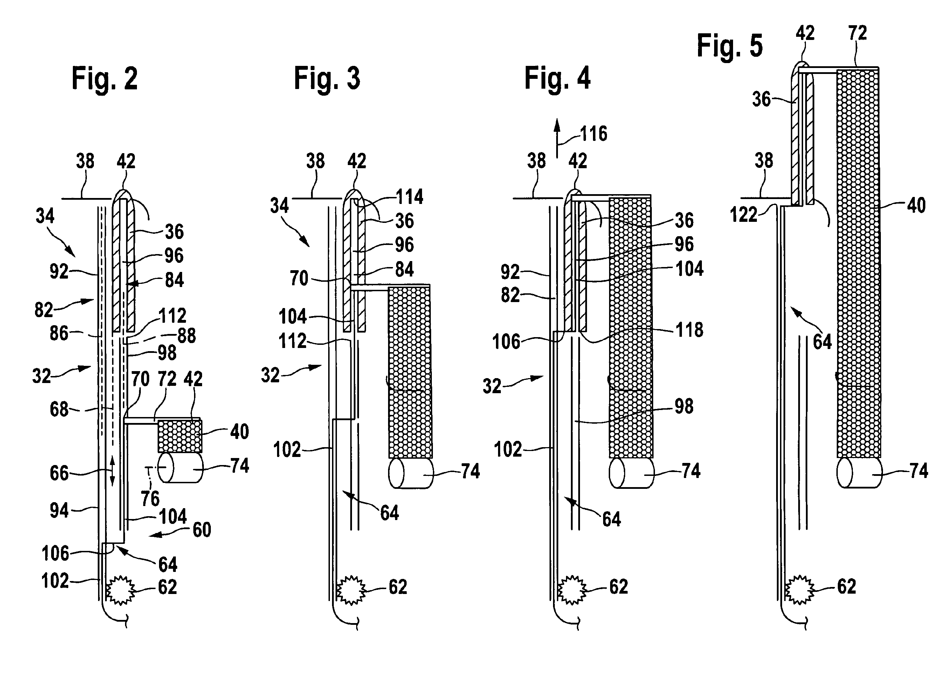

Fig. 2 eine schematische Darstellung eines Zusammenwirkens einer der Führungen mit der Tragstrebe und dem Windstoppelement in einer eingefahrenen Stellung des Windstoppelements und einer in die Seitenwand eingeschobenen Endstellung einer Führungsstrebe beim ersten Ausführungsbeispiel zeigt;
Fig. 3 eine Darstellung ähnlich Fig. 2 des ersten Ausführungsbeispiels bei aus der eingefahrenen Stellung in Richtung einer ausgefahrenen Stellung bewegtem Windstoppelement zeigt;
Fig. 4 eine Darstellung ähnlich Fig. 2 und 3 bei bis zu einer Gürtellinie der Karosserie bewegtem Windstoppelement zeigt;
Fig. 5 eine Darstellung ähnlich Fig. 2 bis 4 bei vollständig ausgefahrenem Windstoppelement und vollständig aus der Seitenwand heraus bewegter Führungsstrebe zeigt;

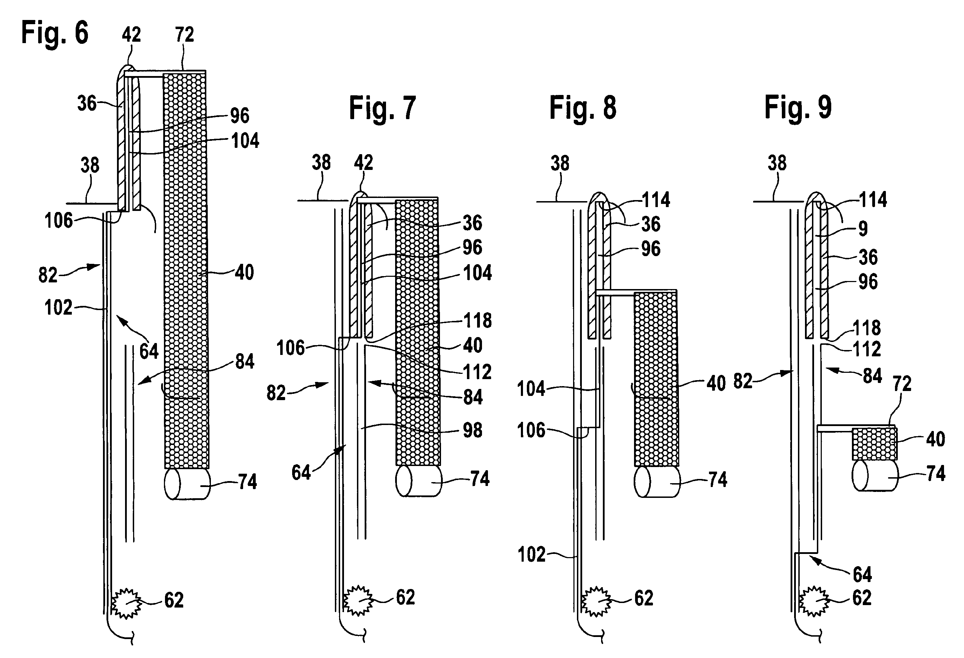

Fig. 6 bis 9 eine Darstellung eines Einfahrens des Windstoppelements von der ausgefahrenen Stellung in die eingefahrene Stellung, wobei
Fig. 6 eine Stellung des Windstoppelements entsprechend Fig. 5 zeigt;
Fig. 7 eine Stellung des Windstoppelements entsprechend Fig. 4 zeigt;
Fig. 8 eine Stellung des Windstoppelements entsprechend Fig. 3 zeigt;
Fig. 9 eine Stellung des Windstoppelements entsprechend Fig. 2 zeigt;

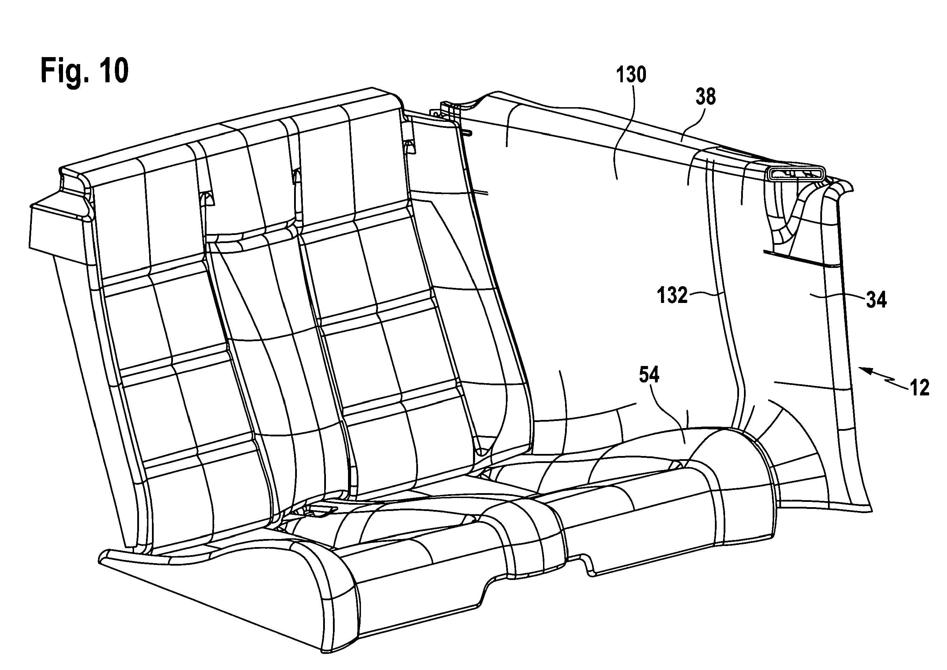

- Fig. 10: eine perspektivische Ansicht einer Rücksitzanlage mit Seitenwand mit einer Innenverkleidung bei einem Kraftfahrzeug mit einer erfindungsgemäßen Windschottanlage gemäß einem zweiten Ausführungsbeispiel;

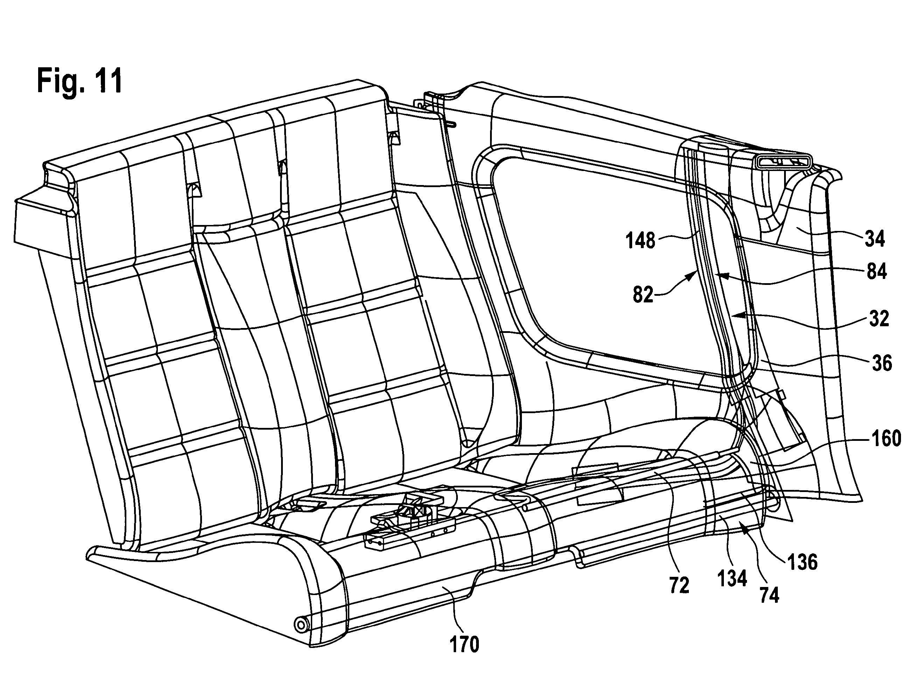

- Fig. 11: eine Darstellung ähnlich Fig. 10 bei abgenommener Innenverkleidung;

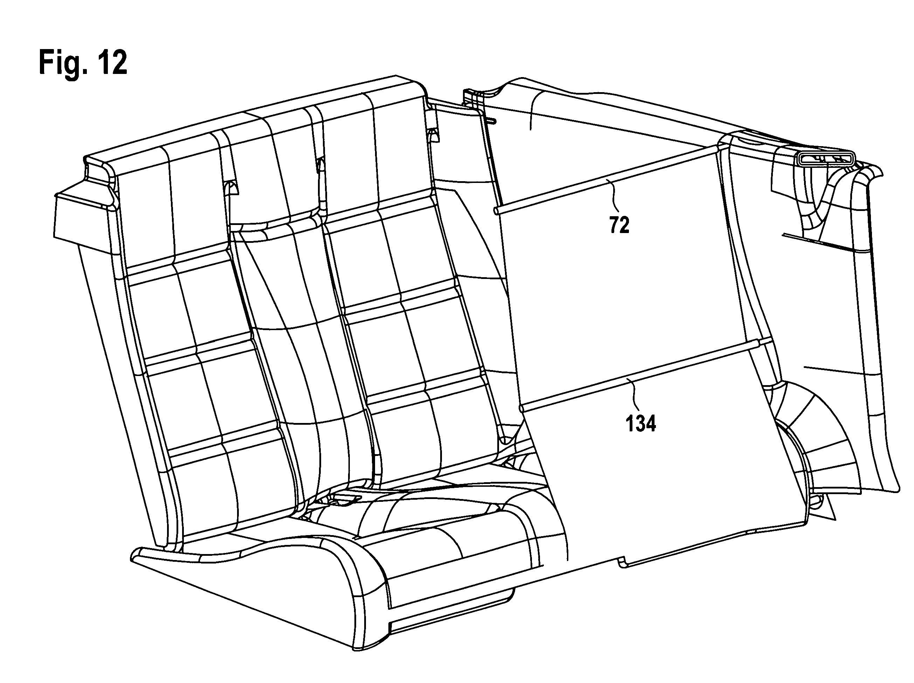

- Fig. 12: eine Darstellung des zweiten Ausführungsbeispiels ähnlich Fig. 10 bei bis zu einer Gürtellinie der Fahrzeugkarosserie ausgefahrenem Windstoppelement;

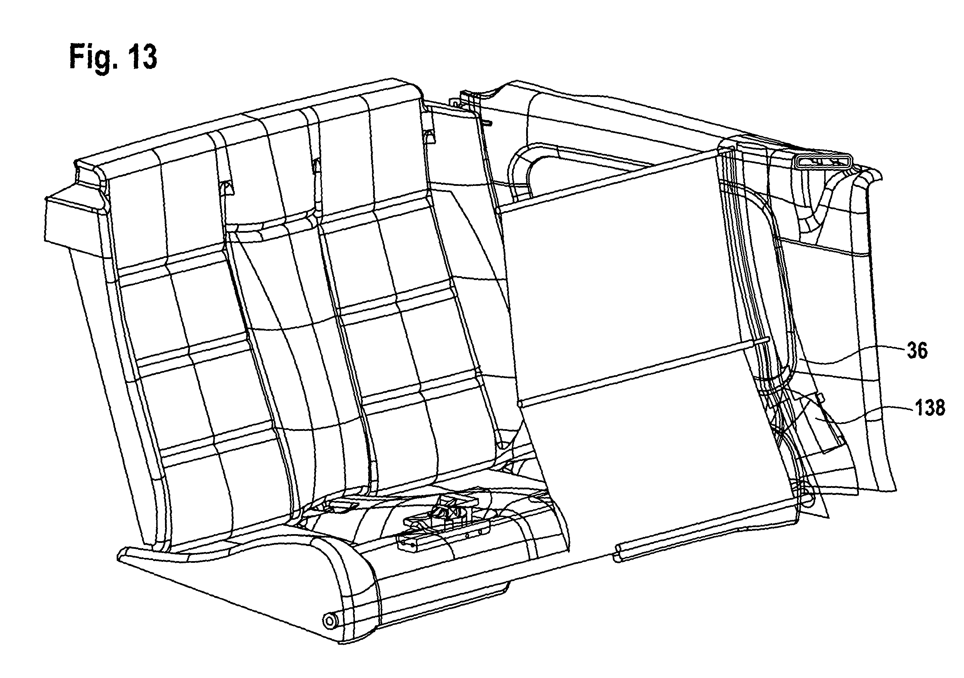

- Fig. 13: eine Darstellung ähnlich Fig. 12 bei abgenommener Innenverkleidung;

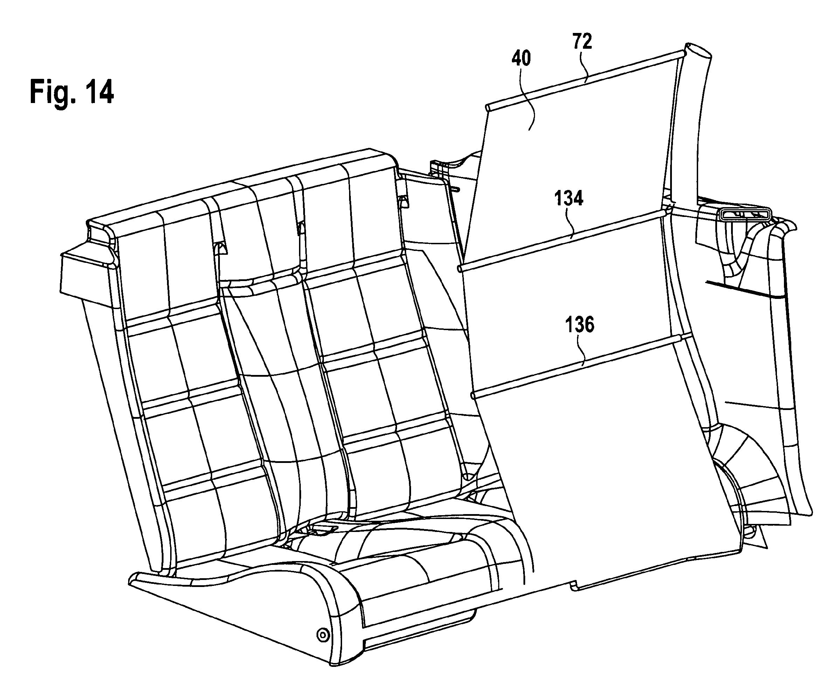

- Fig. 14: eine Darstellung des zweiten Ausführungsbeispiels ähnlich Fig. 10 bei vollständig ausgefahrenem Windstoppelement und vollständig ausgefahrener Führungsstrebe;

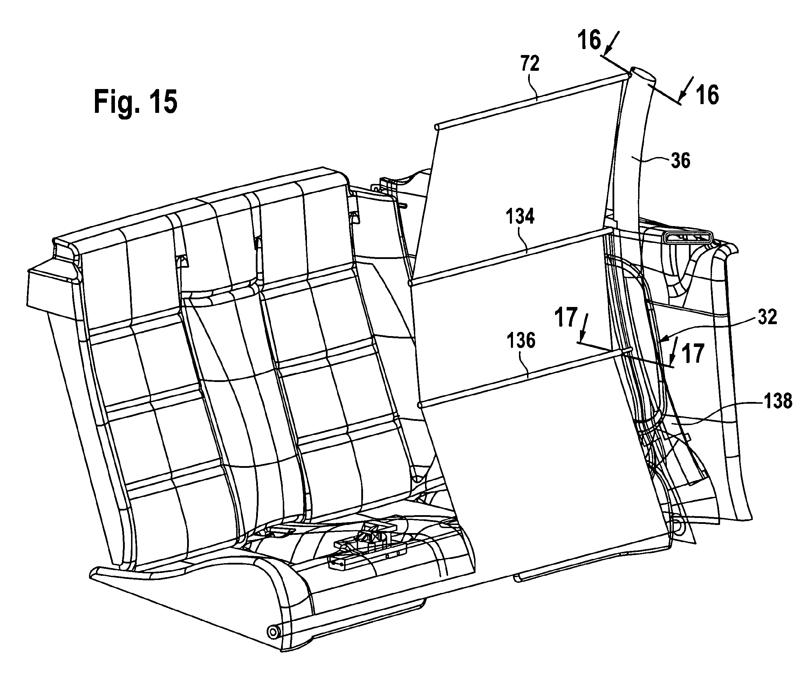

- Fig. 15: eine Darstellung ähnlich Fig. 14 bei abgenommener Innenwandverkleidung;

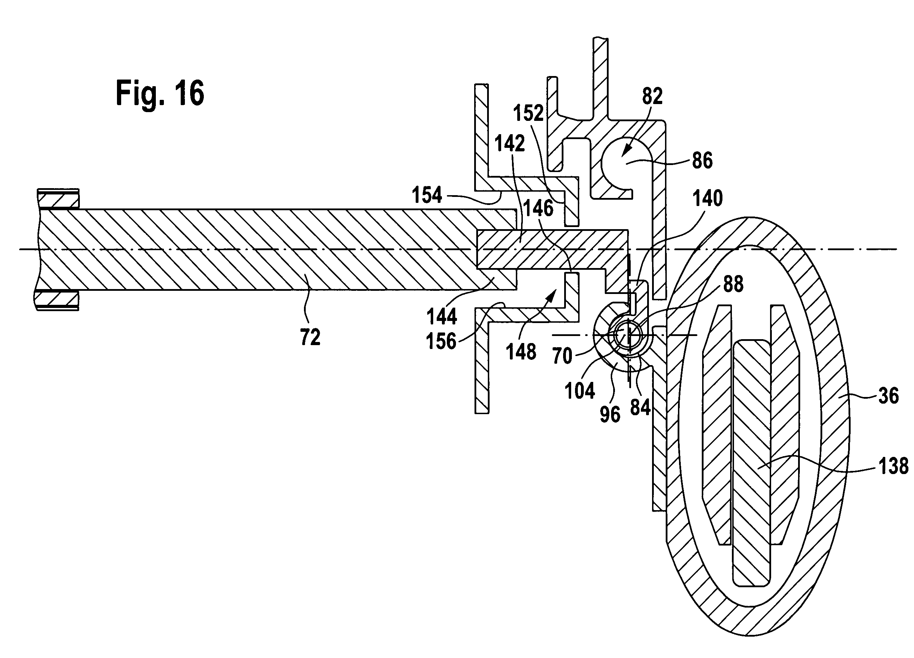

- Fig. 16: einen Schnitt längs Linie 16-16 in Fig. 15;

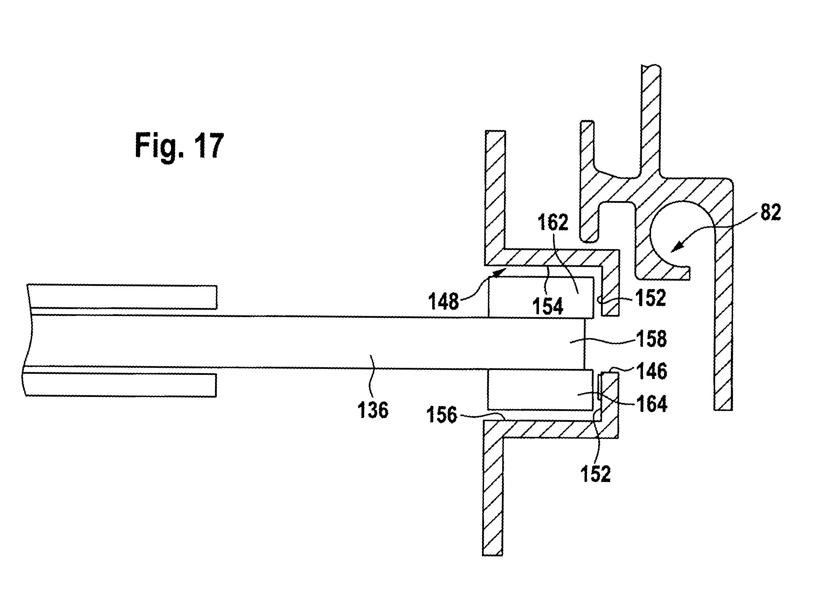

- Fig. 17: einen Schnitt längs Linie 17-17 in Fig. 15;

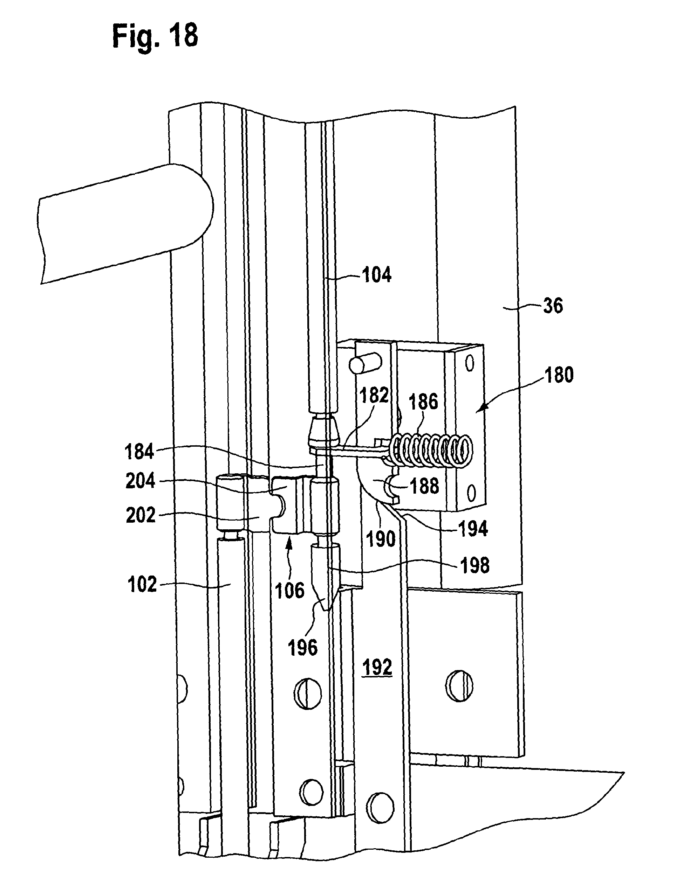

- Fig. 18: eine Darstellung einer erfindungsgemäßen Halteeinrichtung, angeordnet an der Führungsstrebe beim zweiten Ausführungsbeispiel;

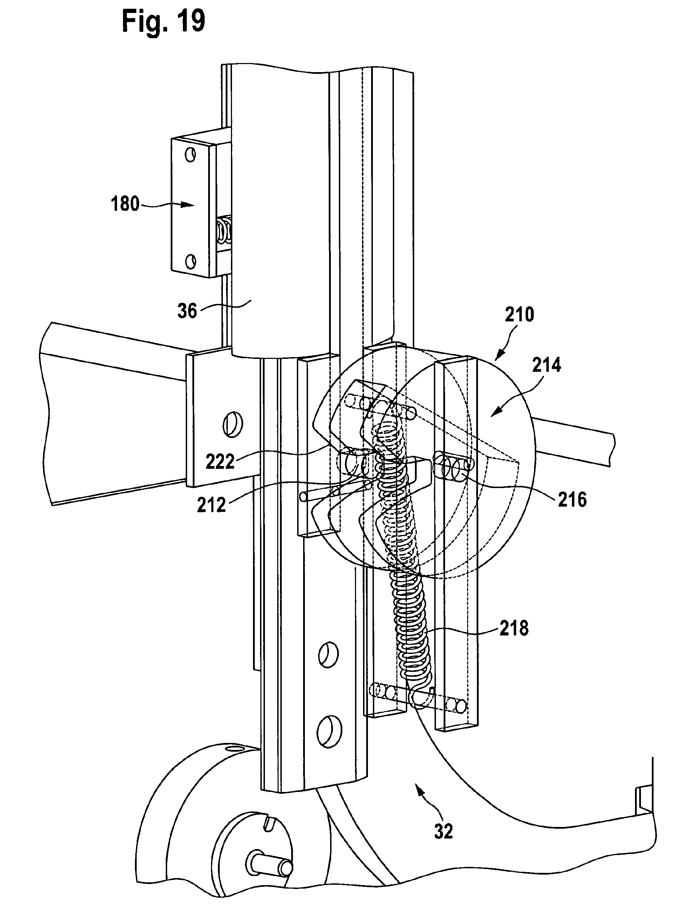

- Fig. 19: eine Darstellung einer erfindungsgemäßen Endeinzugsvorrichtung beim zweiten Ausführungsbeispiel;

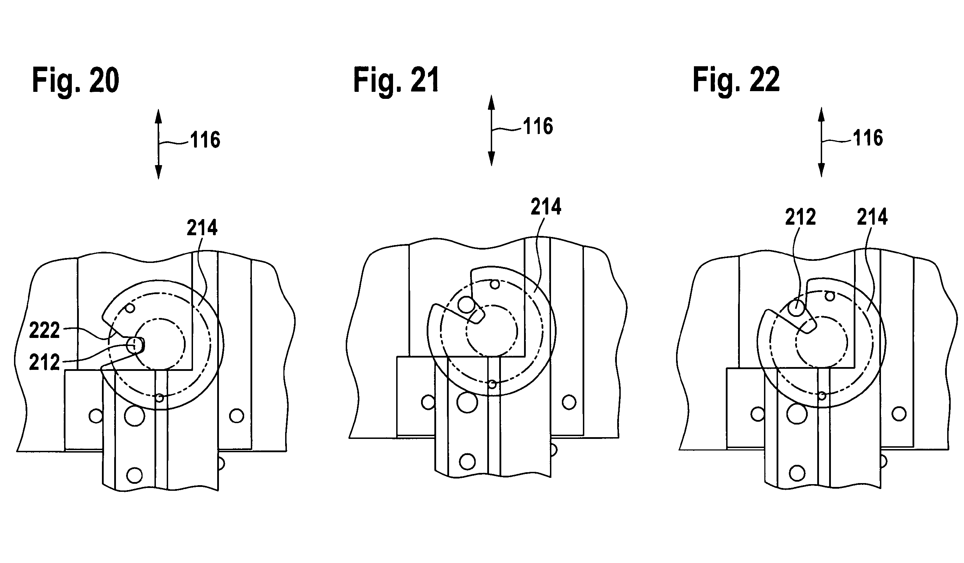

- Fig. 20: eine schematische Darstellung der Endeinzugseinrichtung gemäß Fig. 19 in einer die Führungsstrebe eingezogen haltenden Stellung;

- Fig. 21: eine Darstellung ähnlich Fig. 20 in einer aus der in die Seitenwand hineinbewegten Endstellung herausbewegten Führungsstrebe unmittelbar vor Freigabe derselben;
- Fig. 22: eine Darstellung ähnlich Fig. 20 bei freigegebener Bewegung der Führungsstrebe;

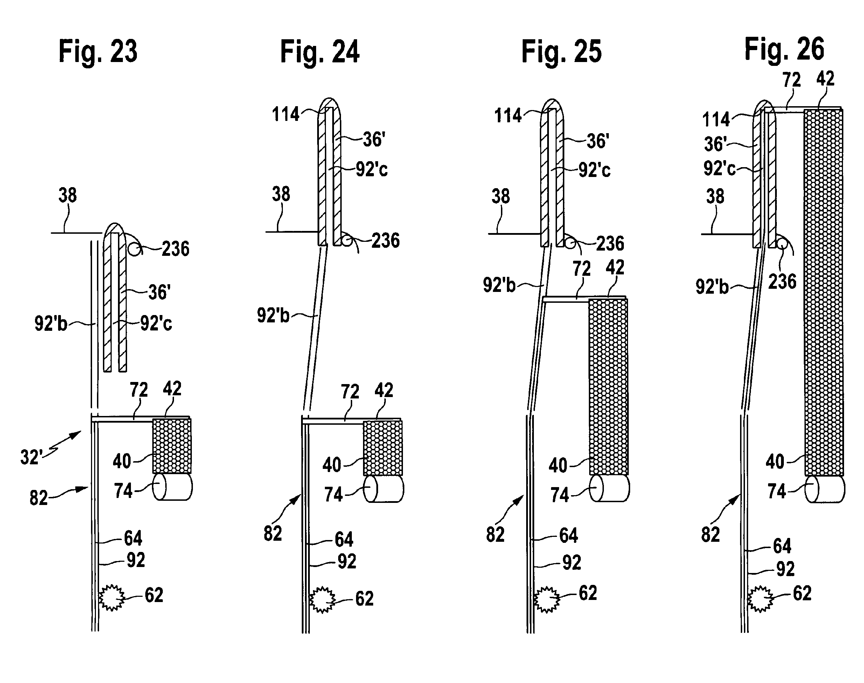

- Fig. 23 bis 26: eine Darstellung eines Ausfahrens des Windschottelements eines zweiten Ausführungsbeispiels einer erfindungsgemäßen Windschottanlage aus der eingefahrenen Stellung in die ausgefahrene Stellung, ähnlich Fig. 2 bis Fig. 9, wobei
Fig. 23 eine schematische Darstellung eines Zusammenwirkens einer der Führungen mit der Tragstrebe und dem Windstopelement in einer eingefahrenen Stellung des Windstopelements und in einer die Seitenwand eingeschobenen Endstellung einer Führungsstrebe beim zweiten Ausführungsbeispiel;
Fig. 24 eine Darstellung ähnlich Fig. 23 des zweiten Ausführungsbeispiels bei in der eingefahrenen Stellung des Windstopelements ausgefahrener Endstellung der Führungsstrebe zeigt;
Fig. 25 eine Darstellung ähnlich Fig. 23 und 24 bei in Richtung einer Gürtellinie der Karosserie bewegtem Windstopelement zeigt;
Fig. 26 eine Darstellung ähnlich Fig. 23 bis 25 bei vollständig ausgefahrenem Windstopelement und vollständig aus der Seitenwand herausbewegter Führungsstrebe zeigt.

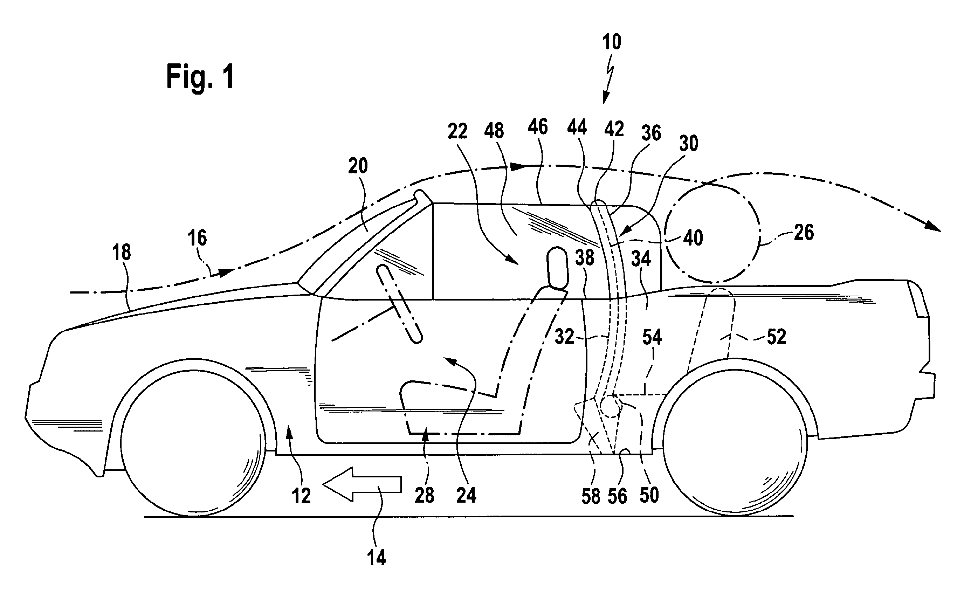

Ein in Fig. 1 dargestelltes und als Ganzes mit 10 bezeichnetes Cabriofahrzeug umfasst eine Karosserie 12, bei welcher bei einer Bewegung in Fahrtrichtung 14 ein Luftstrom 16 zunächst von einer Kühlerhaube 18 und nachfolgend von einer Frontscheibe 20 der Karosserie 12 angehoben wird und über einen nach oben offenen Kopfbereich 22 eines Fahrgastraums 24 hinwegströmt, wobei sich in einem rückwärtigen Bereich der Karosserie 12 ein Wirbel 26 bildet, der zu Zugerscheinungen insbesondere im Kopfbereich 22 einer auf einem Vordersitz 28 sitzenden Person führt, da sich der Wirbel 26 in Richtung der Frontscheibe 20 ausdehnt.

Aus diesem Grund ist hinter den Vordersitzen 28 ein erstes Ausführungsbeispiel einer Windschottanlage 30 vorgesehen, welche zwei Führungen 32 aufweist, von denen jeweils eine an einer von zwei in der Fahrtrichtung 14 einander gegenüberliegenden Seitenwänden 34 angeordnet ist und von denen jede Führung 32 eine Führungsstrebe 36 aufweist, die einerseits in die jeweilige Seitenwand 34 hineinbewegbar ist, so dass diese in der Seitenwand 34 versenkt ist, und andererseits aus der Seitenwand 34 so herausbewegbar ist, dass diese über eine Gürtellinie 38 der Karosserie 12 in der ausgefahrenen Stellung, dargestellt in Fig. 1, nach oben übersteht.

Zwischen den Führungen 32 ist ein Windstoppelement 40 gehalten, welches in seiner ausgefahrenen Stellung sich mit einem oberen Ende 42 soweit nach oben erstreckt, dass dieses obere Ende 42 im Bereich eines oberen Endes 44 der aus den Seitenwänden herausbewegten Führungsstreben 36 liegt und sich ungefähr dabei bis in Höhe einer Oberkante 46 von Seitenfenstern 48 der Karosserie 12 erstreckt.

Ferner erstreckt sich das Windstoppelement 40 von dem oberen Ende 42 hinter den Vordersitzen 28 bis zu einer Aufnahme 50, welche im Bereich einer Rücksitzanlage 52 angeordnet ist, und zwar vorzugsweise unterhalb einer Rücksitzfläche 54, und insbesondere zwischen dieser und einem Karosserieboden 56 liegt.

Vorzugsweise ist zum Ausfahren des Windstoppelements 40 aus der Aufnahme 50 eine vordere Abdeckung 58 in Richtung der Vordersitze 28 abklappbar, um das Windstoppelement 40 mit seinem oberen Ende 42 aus der Aufnahme 50 herauszubewegen und längs der Führungen 32 zum oberen Ende 44 der Führungsstreben 36 zu bewegen, so dass sich in dieser ausgefahrenen Stellung das Windstoppelement 40 zwischen der Aufnahme 50 und dem oberen Ende 44 der Führungsstreben 36 in der aus der Seitenwand 34 herausbewegten Endstellung erstreckt und somit den gesamten Bereich zwischen der Rücksitzanlage und dem oberen Ende 44 der Führungsstreben 36 in ausgefahrener Stellung gegen eine durch den Wirbel 26 verursachte Luftströmung abschottet, die sich somit nicht bis zum über den Vordersitzen 28 liegenden Kopfbereich 22 ausbreiten und bei Fahrer und Beifahrer zu Zugerscheinungen führen kann.

Vorzugsweise ist dabei das Windstoppelement 40 als teilweise luftdurchlässige biegeschlaffe Materialbahn ausgebildet, die sich beim Einfahren des Windstoppelements 40 von der in Fig. 1 ausgefahrenen Stellung in die Aufnahme 50 in der Aufnahme 50 platzsparend verstauen lässt, so dass die Aufnahme 50 bei eingefahrenem Windstoppelement 40 durch die Abdeckung 58 abgedeckt werden kann und somit unterhalb der Rücksitzfläche 54 der Rücksitzanlage 52 verdeckt und unauffällig angeordnet ist. Für den Fall, dass keine Rücksitzanlage 52 vorgesehen ist, kann die Aufnahme 50 auch unterhalb eines in diesem Falle statt der Rücksitzfläche 54 angeordneten Ablagebodens, insbesondere zwischen diesem Ablageboden und dem Karosserieboden 56 angeordnet sein.

Um bei den erfindungsgemäßen Führungen 32 mit ausfahrbarer Führungsstrebe 36 einerseits das Windschottelement 40 sicher führen zu können und andererseits in einfacher Weise dieses von der eingefahrenen Stellung in die ausgefahrene Stellung und zurück bewegen zu können, ist, wie in Fig. 2 bis 5 dargestellt, ein als Ganzes mit 60 bezeichneter Schubantrieb vorgesehen, welcher eine Vorschubeinheit 62 sowie ein Schubglied 64 umfasst, welches durch die Vorschubeinheit 62 längs der jeweiligen Führung 32 verschiebbar ist, und zwar zwischen einer in Fig. 2 dargestellten eingefahrenen Stellung und einer in Fig. 5 dargestellten ausgefahrenen Stellung.

Das Schubglied 64 ist dabei in Richtung seiner Längserstreckung 66 zug- und schubsteif ausgebildet, während es quer zu seiner Längserstreckung 66 bewegbar ist, so dass sich das Schubglied 64 längs gekrümmter Bahnen bewegen lässt.

Die Führung 32 ist dabei als Führung für das Schubglied 64 ausgebildet, welche dem Schubglied 64 eine definierte Bahn vorgibt, so dass das Schubglied quer zu seiner Längserstreckung 66 definiert geführt ist und im Schubbetrieb quer zu dieser Längserstreckung 66 nicht die Möglichkeit hat, auszuweichen, so dass ein Vorschub des Schubglieds 64 durch die Vorschubeinheit 62 dazu führt, dass sich das Schubglied 64 exakt längs einer durch die jeweilige Führung 32 definierten Führungsbahn 68 bewegt.

Das Schubglied 64 ist dabei an seinem längs der Führungsbahn 68 bewegbaren und dem Vorschubantrieb abgewandt angeordneten Ende 70 mit einer Tragstrebe 72 verbunden, welche sich quer zur Fahrtrichtung 14 zwischen den Führungen 32 erstreckt und an welcher das obere Ende 42 des Windstoppelements 40 gehalten ist, so dass durch Bewegen der Tragstrebe 72 von der eingefahrenen in die ausgefahrene Stellung das Windstoppelement 40 aus der Aufnahme 50 herausbewegbar ist.

Das Windstoppelement 40 könnte dabei in der Aufnahme 50 in einer definierten Faltung vorliegen. Besonders einfach ist es jedoch, wenn das Windstoppelement 40 in der Aufnahme 50 zu einem Wickel 74 um eine Wickelwelle 76 aufwickelbar ist.

Bei dem dargestellten Ausführungsbeispiel der Windschottanlage 30 dient das Schubglied 64 nicht nur zum Bewegen der Tragstrebe 72 von der eingefahrenen in die ausgefahrene Stellung, sondern gleichzeitig zum Herausbewegen der Führungsstreben 36 aus den jeweiligen Seitenwänden 34 der Karosserie 12.

Aus diesem Grund ist, wie in Fig. 2 bis 5 schematisch dargestellt, die Führung 32 als Doppelführung ausgebildet, welche zwei im Wesentlichen in konstantem Abstand voneinander verlaufende Bahnführungen 82 und 84 aufweist, von denen jede eine Führungsbahn 86 bzw. 88 aufweist, wobei auch die Führungsbahnen 86 und 88 in konstantem Abstand zueinander verlaufen.

Generell können die Bahnführungen 82, 84 und die durch diese festgelegten Führungsbahnen 86, 88 geradlinig verlaufen, es ist aber auch denkbar, einen beliebigen gekrümmten Verlauf der Bahnführungen 82, 84 und somit auch der Führungsbahnen 86, 88 vorzusehen, so lange die Führungsbahnen 86, 88 in konstantem Abstand voneinander verlaufen.

Wie in Fig. 2 bis 5 dargestellt, ist die Bahnführung 82 als erste Bahnführung ausgebildet und stellt eine stationär integriert in der Karosserie 12 vorgesehene Bahnführung dar, welche beispielsweise mit einem Bahnabschnitt 92 im Bereich der Seitenwand 34 bis zur Gürtellinie 38 verläuft, wobei der Bahnabschnitt 92 von der Gürtellinie 38 sich in Richtung des Karosseriebodens 56 erstreckt, und zwar bis zu einer unteren eingefahrenen Stellung der Tragstrebe 72 und dann in einen Bahnabschnitt 94 übergeht, der entweder weiterhin im Bereich der Seitenwand 34 der Karosserie 12 verlaufen kann oder unter der Rücksitzfläche 54 in der Rücksitzanlage 52.

Insbesondere verläuft der Bahnabschnitt 92 im Wesentlichen geringfügig gekrümmt oder ungefähr geradlinig, während der Bahnabschnitt 94 beliebigen gekrümmten Linien folgen kann.

Entsprechend der Bahnführung 82 verläuft damit auch die von dieser vorgegebene Führungsbahn 86.

Ferner ist die Bahnführung 84 als zweite Bahnführung ausgebildet, welche einen ersten, im Bereich der Führungsstrebe 36 vorgesehenen und mit dieser bewegbaren Bahnabschnitt 96 aufweist, der durch Bewegen der Führungsstrebe 36 mit dieser aus der Seitenwand 34 nach oben über die Gürtellinie 38 herausbewegbar ist, während ein stationärer Bahnabschnitt 98 sich in der eingefahrenen Stellung der Führungsstrebe 36 unmittelbar an den bewegbaren Bahnabschnitt 96 anschließt und in gleicher Weise wie die Bahnführung 82 zunächst im Bereich der Seitenwand 34, bis zur eingefahrenen Stellung der Tragstrebe 72 verläuft und dann dem weiteren Verlauf der Bahnführung 82 in ihrem Bahnabschnitt 94 folgt.

Dabei muss sich die zweite Bahnführung 84 nicht zwingend bis zur Vorschubeinheit 62 erstrecken, wie nachfolgend noch im Einzelnen erläutert wird.

Um zu erreichen, dass das Schubglied 64 durch beide Bahnführungen 82 und 84 geführt wird, umfasst das Schubglied 64 einen ersten Schubkörper 102, der in der ersten Bahnführung 82 längs der ersten Führungsbahn 86 geführt ist, sowie einen zweiten Schubkörper 104, der in der zweiten Bahnführung 84 längs der zweiten Führungsbahn 88 geführt ist.

Die beiden Schubkörper 102 und 104 des Schubglieds 64 sind dabei beispielsweise über einen Kopplungssteg 106 miteinander gekoppelt, es wäre aber auch denkbar, mehrere Kopplungsstege 106 vorzusehen, oder einen sich über zumindest einen nennenswerten Bereich der Längserstreckung 66 des Schubglieds 64 verlaufende Kopplungsleiste zwischen den beiden Schubkörpern 102, 104 vorzusehen.

Bei der dargestellten bevorzugten Ausführungsform des erfindungsgemäßen Schubgliedes 64, welches einen vorteilhaft integriebaren Schubantrieb 60 ergibt, erstreckt sich der erste Schubkörper 102 in jedem Fall von der Vorschubeinheit 62 bis zum Kopplungssteg 106 in Richtung der Längserstreckung 66 in der ersten Bahnführung 82, jedoch im Wesentlichen nicht über den Kopplungssteg 106 hinaus, während sich im Anschluss an den Kopplungssteg 106 der zweite Schubkörper 104 in Richtung der Längserstreckung 66 des Schubglieds 64 bis zur Tragstrebe 72 erstreckt und mit der Tragstrebe 72 gekoppelt ist.

Somit erstreckt sich bei diesem Ausführungsbeispiel vorteilhafterweise die zweite Bahnführung 84 in Richtung auf die Schubeinheit 62 mindestens so weit, dass bei in eingefahrener Stellung stehender Tragstrebe 72 der zweite Schubkörper 104 im Wesentlichen von der Tragstrebe 72 bis zum Kopplungssteg 106 geführt ist.

Mit einem derartigen, in den Bahnführungen 82 und 84 geführten Schubglied 64 lässt sich das Windschottelement 40 von der in Fig. 2 dargestellten eingefahrenen Stellung erfindungsgemäß in die in Fig. 5 dargestellte ausgefahrene Stellung wie folgt verfahren.

In der eingefahrenen, in Fig. 2 dargestellten Stellung steht die Tragstrebe 72 im Bereich der Aufnahme 50 oder ist in diese eingefahren, so dass sowohl das Windschottelement 40 als auch die Tragstrebe 72 unterhalb der Rücksitzfläche 54 liegen.

Das Schubglied 64 ist dabei durch die Vorschubeinheit 62 so weit in der Führung 32 mit den Bahnführungen 82 und 84 verfahren, dass das Ende 70 des Schubglieds 64 die Tragstrebe 72 in der beschriebenen Stellung hält, wobei in diesem Fall der Kopplungssteg 106 in seiner dem Vorschubantrieb 62 nächstliegenden Stellung steht.

Wird nun der Vorschubantrieb 62 so angesteuert, dass dieser das Schubglied 64 mit seinem Ende 70 in Richtung der Gürtellinie 38 der Karosserie 12 bewegt, so wird die Tragstrebe 72 durch das Ende 70 des Schubglieds 64 längs der Führung 32, vorzugsweise längs der für den zweiten Schubkörper 104 vorgesehnen Führungsbahn 88 in der zweiten Bahnführung 84 bewegt, und zwar zunächst längs des stationären Bahnabschnitts 98, wie in Fig. 2 dargestellt.

Da in der eingefahrenen Stellung der Tragstrebe 72 auch die Führungsstrebe 36 in ihrer in die Seitenwand 34 hineinbewegten Endstellung steht, bewegt sich das Ende 70 des zweiten Schubkörpers 104 bei Erreichen eines dem Bahnabschnitt 96 zugewandten Endes 112 des stationären Bahnabschnitts 98 in den bewegbaren Bahnabschnitt 96 hinein, wobei der bewegbare Bahnabschnitt 96, wie in Fig. 3 dargestellt, zunächst noch in der Endstellung verbleibt.

Bei dieser Bewegung des Schubglieds 64 wirkt der Vorschubantrieb 62 mit seiner Schubkraft zunächst auf den ersten Schubkörper 102 und dieser überträgt die Schubkraft auf den Kopplungssteg 106, welcher dann seinerseits wiederum die Schubkraft auf den zweiten Schubkörper 104 überträgt. Dabei sind beide Schubkörper 102, 104 stets in den entsprechenden Bahnführungen 82 bzw. 84 geführt und somit wird verhindert, dass diese bei einwirkender Schubkraft quer zu ihrer Längserstreckung 66 von der vorgesehenen Führungsbahn 86 bzw. 88 abweichen und somit eine Schubkraftübertragung verhindern.

Die Vorschubbewegung des zweiten Schubkörpers 104 führt dazu, dass sich das Ende 70 des Schubglieds 64 im bewegbaren Bahnabschnitt 96 weiter bewegt, und zwar in Richtung des oberen Endes 42 der Führungsstrebe 36.

Nahe des oberen Endes 42 der Führungsstrebe 36 ist die zweite Bahnführung 84 mit einem Anschlag 114 versehen, an welchem das Ende 70 des Schubglieds 64, wie in Fig. 4 dargestellt, bei weiterer Bewegung des Schubglieds 64 durch die Vorschubeinheit 62 zur Anlage kommt.

Bei Anliegen des Endes 70 an dem Anschlag 114 erfolgt eine Mitnahme des bewegbaren Bahnabschnitts 96 unter Mitnahme der Führungsstrebe 36 derart, dass die Führungsstrebe 36 aus der Seitenwand 34 herausbewegt wird und sich dabei in Richtung 116 über die Gürtellinie 38 der Karosserie 12 erhebt.

Dabei bewegt sich der Kopplungssteg 106 längs der Führung 32 weiter in Richtung der Gürtellinie 38. Der Kopplungssteg 106 ist dabei so angeordnet, dass dieser bei vollständig in den bewegbaren Bahnabschnitt 96 eingefahrenem zweitem Schubkörper 104 sich zwischen dem bewegbaren Bahnabschnitt 96 und der ersten Bahnführung 82, insbesondere dem Bahnabschnitt 92 der ersten Bahnführung 82, erstreckt, so dass dann, wenn der bewegbare Bahnabschnitt 96 beginnt sich mit seinem dem Ende 112 des stationären Bahnabschnitts 98 zugewandten Ende 118 sich vom Ende 112 zu entfernen, der zweite Schubkörper 104 vollständig in den bewegbaren Bahnabschnitt 96 geführt ist und keinen zwischen den Enden 112 und 118 der Bahnabschnitte 98 bzw. 96 freiliegenden Bereich aufweist, über welchen eine Schubkraft übertragen wird. Vielmehr wird die Schubkraft auf den zweiten Schubkörper 104 stets durch den Kopplungssteg 106 übertragen, der an einem im bewegbaren Bahnabschnitt 96 geführten Bereich des zweiten Schubkörpers 104 angreift.

Vorzugsweise liegt dabei der Kopplungssteg 106 nahe oder im Bereich des Endes 118 des bewegbaren Bahnabschnitts 96 dann, wenn der zweite Schubkörper 104 mit dem Ende 70 des Schubglieds gegen den Anschlag 114 wirkt und somit die Führungsstrebe 36 in der Richtung 116 zu verschieben beginnt.

Erfindungsgemäß lässt sich somit das Schubglied 64 durch die Vorschubeinheit 62 so lange weiterverschieben, bis der Kopplungssteg 106 das nahe der Gürtellinie 38 liegende Ende 122 der Bahnführung 82 erreicht hat, wie in Fig. 5 dargestellt.

Bei Erreichen des Endes 122 durch den vorgeschobenen Kopplungssteg 106 steht außerdem die Führungsstrebe 36 in ihrer vollständig aus der Seitenwand 34 herausbewegten Stellung, so dass damit auch die Tragstrebe 72 in ihrer vollständig ausgefahrenen Stellung steht und dabei durch den bewegbaren Bahnabschnitt 96 geführt wird, der seinerseits an der Führungsstrebe 36 gehalten ist, die ihrerseits wiederum eine Führung an der Karosserie 12, vorzugsweise im Bereich der Seitenwand 34 erfährt.

Bei entsprechend umgekehrtem Antrieb des Schubgliedes 64 lässt sich, wie in Fig. 6 bis 9 dargestellt, das Windstoppelement 40 von der in Fig. 6 dargestellten vollständig ausgefahrenen Stellung wiederum in die in Fig. 9 dargestellte eingefahrene Stellung bewegen, wobei zunächst, wie beim Übergang von Fig. 6 nach Fig. 7 dargestellt, ein Hineinbewegen der Führungsstrebe 36 in die Seitenwand 34 erfolgt, so dass die Führungsstrebe 36, wie in Fig. 7 dargestellt, in der in die Seitenwand 34 hineinbewegten Endstellung mit ihrem oberen Ende 42 im Bereich der Gürtellinie 38 liegt. In dieser eingeschobenen Endstellung der Führungsstrebe 36 liegt das Ende 118 des bewegbaren Bahnabschnitts 96 wiederum im Wesentlichen an dem Ende 112 des stationären Bahnabschnitts 98 an, so dass bei weiterem Zurückziehen des Schubgliedes 64 der zweite Schubkörper 104 wieder in den stationären Bahnabschnitt 98 der zweiten Bahnführung 84 eintritt und in diesem geführt wird, wobei sich in diesem Fall wieder der Kopplungssteg 106 zwischen der ersten Bahnführung 82 und dem stationären Bahnabschnitt 98 der zweiten Bahnführung 84 erstreckt, wie in Fig. 8 dargestellt ist.

Das Zurückziehen des Schubglieds 64 kann dann so weit erfolgen, bis die Tragstrebe 72, wie in Fig. 9 dargestellt, in ihrer eingefahrenen Stellung nahe oder in der Aufnahme 50 steht.

Beim Einfahren der Tragstrebe 72 von der in Fig. 6 dargestellten vollständig ausgefahrenen Stellung in die in Fig. 9 dargestellte vollständig eingefahrene Stellung erfolgt gleichzeitig ein entsprechend der Position der Tragstrebe 72 notwendiges Aufwickeln des Windstoppelements 40 auf den Wickel 74.

Bei einem zweiten, in den Fig. 10 bis 15 in perspektivischer Ansicht vom Innenraum her dargestellten Ausführungsbeispiel einer erfindungsgemäßen Windschottanlage liegen die Führungsstrebe 36 sowie die Bahnführungen 82 und 84 in der Seitenwand 34 und sind durch eine Innenverkleidung 130 der Seitenwand 34 abgedeckt, in welcher nur noch beispielsweise ein Schlitz 132 sichtbar ist, welcher sich von der Rücksitzfläche 54 bis zur Gürtellinie 38 der Karosserie 12 erstreckt.

Diesen Schlitz 132 durchgreifen, wie in Fig. 12 und 14 dargestellt, sowohl die Tragstrebe 72 auf ihrem Weg von der in Fig. 11 dargestellten eingefahrenen Stellung in die in Fig. 14 und 15 dargestellte ausgefahrene Stellung und außerdem noch weitere Querstreben 134 und 136, die dazu dienen, das Windstoppelement 40 zusätzlich zwischen den Führungen 32 zu stabilisieren.

Ferner ist bei diesem Ausführungsbeispiel die Führungsstrebe 36, wie insbesondere in Fig. 13 und 15 erkennbar, als im Querschnitt ovales Rohr ausgebildet, in welches ein Führungsträger 138 eingreift, längs welchem die Führungsstrebe 136 durch Führungselemente, beispielsweise Gleitführungselemente oder Rollführungselemente, geführt bewegbar ist.

Der Führungsträger 138 und die Führungsstrebe 136 können dabei, wie in Fig. 13 und 15 dargestellt, geringfügig gekrümmt ausgebildet sein, sollten jedoch vorzugsweise eine im Wesentlichen stetige Krümmung aufweisen.

Wie in Fig. 16 ferner dargestellt, sind bei dem zweiten Ausführungsbeispiel die Bahnführungen 82 und 84 als im Querschnitt im Wesentlichen runde Führungen ausgebildet, in denen die Schubkörper 102 und 104, welche beispielsweise als Steigseile ausgebildet sind, zweckmäßigerweise leicht gleitend geführt sind.

Wie ferner in Fig. 16 dargestellt, führt von dem Ende 70 des Schubglieds 64, in diesem Fall des Schubkörpers 104, ein Arm 140 zu einem Lagerzapfen 142, welcher ein Ende 144 der Tragstrebe 72 aufnimmt.

Dabei erstreckt sich der Lagerzapfen 142 beispielsweise durch einen Schlitz 146 einer Strebenführung 148, in welcher die Querstreben 134 und 136 geführt sind.

Die Strebenführung 148 weist dabei einen Führungsboden 152 auf, an welchem die Querstreben 134, 136 vorzugsweise anliegen, sowie Führungswände 154 und 156, zwischen denen Enden 158 der Querstreben 134 und 136 laufen.

Wie beispielsweise exemplarisch anhand der Querstrebe 136 dargestellt, weisen die Enden 158 der Querstreben 134, 136 Laufrollen 162, 164 auf, die sich beiderseits des Schlitzes 146 am Führungsboden 152 der Strebenführung 148 abstützen, so dass insgesamt die Querstreben 134 und 136 leicht laufend in der Strebenführung 148 geführt sind, die vorzugsweise bis zur Gürtellinie 38 der Karosserie 12 in der jeweiligen Seitenwand 34 in konstantem Abstand von der jeweiligen stationären Bahnführung 82 verlaufen.

Der Schlitz 132 in der Innenverkleidung 130 der Seitenwand verläuft somit im Wesentlichen deckungsgleich zu den Strebenführungen 148, die hinter dem Schlitz 132 liegen, so dass die den Schlitz 132 durchgreifenden Querstreben 134, 136 in der Strebenführung 148 mit ihren Enden 158 geführt sind.

Ferner öffnet sich die Strebenführung 148, wie in Fig. 11 dargestellt, in ihrem nahe dem Wickel 74 liegenden Bereich 160, so dass die Querstreben 134 und 136 die Möglichkeit haben, sich entsprechend ihrer Lage im Wickel 74 auszurichten, bevor sie in den auf eine Wickelwelle 162 aufzuwickelnden Wickel 74 übergehen.

Vorzugsweise liegen dabei, wie in Fig. 11 dargestellt, die Querstreben 134 und 136 im Wickel 74 so, dass diese im Wesentlichen in einander gegenüberliegenden Bereichen der Wickelwelle 162 angeordnet sind.

Um außerdem die Möglichkeit zu schaffen, die jeweilige Führung 32 quer zur Fahrtrichtung 14 mit variablem Abstand zueinander verlaufen zu lassen, sind sowohl die Tragstrebe 72 als auch die Querstreben 134 und 136 als Teleskopstreben ausgebildet, die federbeaufschlagt die Tendenz haben, immer die maximale Länge einzunehmen, so dass insbesondere im Fall der Querstreben 134 und 136 diese mit ihren Rollen 172 und 164 an dem jeweiligen Führungsboden 152 federbeaufschlagt anliegend verlaufen, um kein Schlag- oder Wackelgeräusch zu erzeugen.

Um sicherzustellen, dass sich beim Herausbewegen und Hineinbewegen der Führungsstrebe 36 relativ zur Seitenwand 34 die Führungsstrebe 36 und der mit dieser zusammenhängend bewegbare Bahnabschnitt 96 nicht relativ zum zweiten Schubkörper 104 bewegen und insbesondere beim Einschieben der Führungsstrebe 36 der zweite Schubkörper 104 nicht aus dem bewegbaren Bahnabschnitt 96 herausgezogen wird, ist an der Führungsstrebe 36 eine als Ganzes mit 180 bezeichnete Haltevorrichtung vorgesehen, die bei beginnendem Ausschieben der Führungsstrebe 36 aus der Seitenwand 34 die Führungsstrebe 36 relativ zum zweiten Schubkörper 104 fixiert.

Hierzu umfasst die Haltevorrichtung 180 als Halteelement eine Haltegabel 182, die gabelförmig einen querschnittsreduzierten Bereich 184 des zweiten Schubkörpers 104 umgreifen kann und somit eine Verschiebung des zweiten Schubkörpers 104 relativ zur Führungsstrebe 36 verhindern kann, da die Haltegabel 182 ausschließlich quer zum zweiten Schubkörper 104 bewegbar in der Haltevorrichtung 180 und somit auch relativ zur Führungsstrebe 36 gelagert ist.

Die Haltegabel 182 ist ferner durch eine Druckfeder 186 beaufschlagt, welche derart auf die Haltegabel 182 einwirkt, dass die Haltegabel 182 stets das Bestreben hat, den querschnittsreduzierten Bereich 184 des zweiten Schubkörpers 104 zu umgreifen.

Auf die Haltegabel 182 wirkt noch ein Schwenkhebel 188, welcher eine Anlaufschräge 190 aufweist, die einem stationär an der Seitenwand 34 gehaltenen Betätigungsfinger 192 zugewandt ist und mit einer Betätigungsschräge 194 des Bestätigungsfingers 192 dann zusammenwirkt, wenn die Führungsstrebe 36 die vollständig in die Seitenwand 34 eingeschobene Stellung erreicht hat.

In diesem Fall führen das Zusammenwirken des Betätigungsfingers 192 mit der Betätigungsschräge 194 und der Anlaufschräge 190 dazu, dass der Schwenkhebel 188 entgegengesetzt zur Druckfeder 186 wirkt und die Haltegabel 182 so weit quer zum zweiten Schubkörper 104 verschiebt, dass diese nicht mehr den querschnittsreduzierten Bereich 184 umgreift, sondern eine Bewegung des zweiten Schubkörpers 104 relativ zum bewegbaren Bahnabschnitt 96 und auch zur Führungsstrebe 36 freigibt, so dass der zweite Schubkörper 104 die Möglichkeit hat, wieder in den stationären Bahnabschnitt 98 der zweiten Bahnführung 94 einzutreten.

Hierzu ist vorzugsweise ein mit einer konischen Spitze 196 versehener Einlaufkörper an dem zweiten Schubkörper 104 vorgesehen, welcher ein trotz Toleranzen zwischen den Enden 112 und 118 ein Einfinden des zweiten Schubkörpers 104 in den stationären Bahnabschnitt 98 erleichtert.

Wie in Fig. 18 ferner dargestellt, ist vorzugsweise beim zweiten Ausführungsbeispiel der Kopplungssteg 106 durch zwei formschlüssig ineinandergreifende Steghälften 202 und 204 gebildet, die in Richtung der Längserstreckung 66 des Schubglieds 64 den ersten Schubkörper 102 und den zweiten Schubkörper 104 koppeln, jedoch quer zur Längserstreckung 66 des Schubkörpers einen Toleranzausgleich zulassen, der insbesondere dann nötig ist, wenn die beiden Bahnführungen 82 und 84 gekrümmt sind, da bei einer Krümmung Abstandsvariationen zwischen diesen auftreten können.

Um sicherzugehen, dass die Führungsstrebe 36 stets dann, wenn diese in Richtung ihrer eingeschobenen Stellung bewegt wird, die endgültig in die Seitenwand 34 eingeschobene Endstellung auch erreicht und in dieser verbleibt, sich insbesondere bei Erschütterungen in einem Cabriofahrzeug sich aus dieser vollständig eingeschobenen Endstellung ohne Einwirkung des Schubglieds 64 nicht löst, ist eine Endeinzugseinrichtung 210 vorgesehen.

Diese Endeinzugseinrichtung 210 umfasst einen fest mit der Führungsstrebe 36 verbundenen Einzugszapfen 212, welcher mit einem Einzugsrad 214 zusammenwirkt, welches an der Seitenwand 34 um eine Achse 216 drehbar ist und durch eine Feder 218 in zwei Übertotpunktstellungen darstellenden Drehstellungen festlegbar ist.

Ferner ist das Einzugsrad 214 zum Zusammenwirken mit dem Einzugszapfen 212 mit einem Maul 222 versehen, welches mit dem Einzugszapfen 212 zusammenwirken kann, wie in Fig. 20 bis 22 dargestellt.

Ausgehend von der in Fig. 20 dargestellten vollständig eingeschobenen Endstellung der Führungsstrebe 36 steht das Einzugsrad 214 in einer stabilen ersten die Führungsstrebe 36 in der Endstellung haltenden Drehstellung, in welcher das Maul 222 den Einzugszapfen 212 so aufnimmt, dass dieser durch das Maul 222 gefangen ist, wobei das Maul 222 sich dabei quer zu einer zur Richtung 116 erstreckt, längs welcher die Führungsstrebe 36 bewegbar ist. In dieser Endstellung hält das Einzugsrad 214 die Endstellung aufrecht und sichert diese somit.

Wird nun die Führungsstrebe 36 unter Einwirkung des Schubglieds 64 ausgehend von ihrer eingeschobenen Endstellung aus der Seitenwand 34 herausgeschoben, so wird der Einzugszapfen 212 mitgenommen und wirkt dahingehend auf das Einzugsrad 214 ein, dass sich dieses entgegen der Kraftwirkung der Feder 218 bis zur in Fig. 21 dargestellten Totpunktstellung dreht.

Bei einem Weiterbewegen der Führungsstrebe 36 überschreitet das Einzugsrad 214 den Totpunkt (Fig. 21) und geht in eine zweite stabile Drehstellung über (Fig. 22), in welcher das Maul 222 relativ zur Richtung 116 so weit verschwenkt wird, dass dieses schräg zur Richtung 116 verläuft und den Einzugszapfen 212 freigibt, so dass dieser mit der Führungstrebe 36 in Richtung 116 weiter bewegt werden kann und einem vollständigen Ausschieben der Führungsstrebe 36 aus der Seitenwand 34 nicht im Wege steht.

Wird dagegen die Führungsstrebe 36 unter Wirkung des Schubglieds 64 wieder in die Seitenwand eingeschoben, so erreicht der Einzugszapfen 212 kurz vor der Endstellung der Führungsstrebe 36, wie in Fig. 22 dargestellt, wiederum das Maul 222, das nach wie vor aufgrund der stabilen zweiten Drehstellung durch die Feder 218 schräg zur Richtung 116 verläuft, so dass der Einzugszapfen mit dem Maul 222 in Eingriff kommen kann.

Ein weitere Bewegen der Führungsstrebe 36 mit dem Einzugszapfen 212 in Richtung der vollständig eingeschobenen Endstellung führt zu einem Verschwenken des Einzugsrads 214 und somit des Mauls 222 in Richtung der Totpunktstellung, wie in Fig. 21 dargestellt, so dass nach Überschreiten der Totpunktstellung das Maul 222 beginnt, auf den Einzugszapfen 212 einzuwirken und das Einzugsrad 214 hat aufgrund der durch die Feder 218 angestrebten stabilen Stellung die Tendenz, in die in Fig. 20 dargestellte stabile erste Drehstellung als Einzugsendstellung überzugehen und daher wirkt auch das Einzugsrad 214 über das Maul 222 auf den Einzugszapfen 212 derart ein, dass dieser in Richtung der eingeschobenen Endstellung der Führungsstrebe 36 bewegt wird und somit auch die Führungsstrebe 36 in dieser Richtung mitgenommen wird, so weit bis die eingeschobene Endstellung, dargestellt in Fig. 20 sowohl der Führungsstrebe 36 als auch des Einzugszapfens 212 erreicht ist und aufgrund der Wirkung der Feder 218 auf das Einzugsrad 214 der Einzugszapfen 212 federbeaufschlagt in der eingeschobenen Endstellung gehalten wird.

Somit erlaubt es die Endeinzugseinrichtung 210 einerseits sicherzustellen, dass die Führungsstrebe 36 in jedem Fall die eingeschobene Endstellung erreicht und dann auch diese eingeschobene Endstellung so lange aufrecht zu erhalten, bis wiederum ein Verschieben der Führungsstrebe 36 in Richtung 116 durch Einwirkung des Schubglieds 64 erfolgt.

Bei einem zweiten Ausführungsbeispiel einer erfindungsgemäßen Windschottanlage in einem mit dieser ausgerüsteten Kraftfahrzeug sind die Führungen 32' so ausgebildet, dass deren Führungsstrebe 36' angetrieben durch einen Antrieb 236 ausgehend von einer in die jeweilige Seitenwand 34 hinein bewegten Stellung, so dass die Führungsstrebe 36' in der Seitenwand 34 versenkt ist, dargestellt in Fig. 23, über die Gürtellinie 38 ausfahrbar, so dass die Führungsstreben 36', wie in Fig. 34 dargestellt, über die Gürtellinie 38 der Karosserie 12 nach oben überstehen.

Auch bei dem zweiten Ausführungsbeispiel ist das obere Ende 42 des Windstopelements 40 an einer Tragstrebe 72 gehalten, die mit einem dem Vorschubantrieb abgewandt angeordneten Ende 70 des Schubglieds 64 verbunden ist, so dass sich die Tragstrebe 72 zwischen den Führungen 32' erstreckt.

Die Tragstrebe 72 ist dabei, wie in Fig. 23 und 26 dargestellt, zwischen der eingefahrenen Stellung, dargestellt in Fig. 23 und der ausgefahrenen Stellung, dargestellt in Fig. 26 bewegbar.

Im Gegensatz zum ersten Ausführungsbeispiel weisen allerdings die Führungen 32' nur eine Bahnführung 82' auf, die einen stationären, in der jeweiligen Seitenwand 34 verlaufenden Bahnabschnitt 92'a und einen bewegbaren, in der jeweiligen Seitenwand verlaufenden Bahnabschnitt 92'b umfasst, sowie einen in der Führungsstrebe 36' angeordneten und mit dieser verfahrbaren Bahnabschnitt 92c.

Dabei verlaufen in der eingefahrenen Stellung der Führungsstrebe 36', wie in Fig. 23 dargestellt, der bewegbare Bahnabschnitt 92'b und der in der Führungsstrebe 36 angeordnete Bahnabschnitt 92'c nebeneinander, während in der ausgefahrenen Stellung der Führungsstrebe 36' der bewegbare Bahnabschnitt 92'b sich soweit quer zu seiner Längserstreckung bewegt hat, dass er eine Verbindung zwischen dem in der ausgefahrenen Führungsstrebe 36' vorgesehenen Bahnabschnitt 92'c und dem stationären Bahnabschnitt 92'a herstellt.

Aus diesem Grund bleibt die Tragstrebe 72 so lange in ihrer eingefahrenen Stellung, bis zunächst die Führungsstrebe 36' vollständig aus der Seitenwand 34 ausgefahren ist, wie in Fig. 24 dargestellt, über die Gürtellinie 38 übersteht und der Bahnabschnitt 92'b der Bahnführung 82' eine Verbindung zwischen dem Bahnabschnitt 92'a und dem Bahnabschnitt 92'c der Bahnführung 82' herstellt.

Erst dann erfolgt durch Bewegen des Schubgliedes 64 ein Verfahren der Tragstrebe 72 mitsamt dem Windstopelement 40 aus der in Fig. 23 dargestellten eingefahrenen Stellung in die in Fig. 26 dargestellte ausgefahrene Stellung, wobei das Schubglied 64 bis zu dem oberen Anschlag 114 in dem Bahnabschnitt 92'c der Bahnführung 82' bewegbar ist, der am oberen Ende der Führungsstrebe 36' liegt.

Ferner lässt sich das Windstopelement 40 auch beim zweiten Ausführungsbeispiel wieder in einfacher Weise in die eingefahrene Stellung bewegen, indem zunächst durch das Schubglied die Tragstrebe 72 in die eingefahrene Stellung bewegt wird, dann der bewegbare Bahnabschnitt 92'b der Bahnführung 82' soweit zur Seite bewegt wird, dass die Führungsstrebe 36 in ihre eingefahrene Stellung bewegbar ist.

Im Übrigen sind auch bei dem zweiten Ausführungsbeispiel diejenigen Elemente, die mit denen des ersten Ausführungsbeispiels identisch sind, mit denselben Bezugszeichen versehen, so dass hinsichtlich derselben und im Übrigen auch hinsichtlich der weiteren Funktion des zweiten Ausführungsbeispiels voll inhaltlich auf die Ausführungen zum ersten Ausführungsbeispiel verwiesen werden kann.

## Patentansprüche

1. Windschottanlage umfassend ein an einer Karosserie (12) eines Kraftfahrzeugs (10) angeordnetes Windstoppelement (40), welches in einer an der Karosserie (12) gehaltenen Aufnahme (50) verstaubar ist, und welches in einer unwirksamen Stellung in die Aufnahme (50) eingefahren ist sowie in einer wirksamen Stellung aus der Aufnahme (50) ausgefahren ist, in welcher sich das Windstoppelement (40) hinter einer Sitzreihe (28) zwischen Seitenwänden (34) der Karosserie und über eine Gürtellinie (38) der Karosserie (12) erhebt,
**dadurch gekennzeichnet, dass** das Windstoppelement (40) zwischen zwei bezogen auf eine Längsrichtung der Karosserie (12) einander gegenüberliegend im Bereich von Seitenwänden (34) der Karosserie (12) angeordneten Führungen (32) geführt ist, dass jede der Führungen (32) jeweils eine in die Seitenwand (34) hineinbewegbare und aus der Seitenwand (34) nach oben über eine Gürtellinie (38) der Karosserie (12) herausbewegbare Führungsstrebe (36) umfasst und dass eine das Windstoppelement (40) im Bereich eines oberen Endes (42) haltende Tragstrebe (72) längs der Führungen (32) zwischen einer eingefahrenen Stellung und einer nach oben über die Gürtellinie (38) ausgefahrenen und von den aus den Seitenwänden (34) herausbewegten Führungsstreben (36) geführten Stellung bewegbar ist.

2. Windschottanlage nach Anspruch 1, **dadurch gekennzeichnet, dass** die Aufnahme (50) mit einer Einzugseinrichtung versehen ist, welche das Windstopelement (40) in einem zwischen der Tragstrebe und der Aufnahme (50) liegenden ausgezogenen Bereich aufgespannt hält.

3. Windschottanlage nach einem der voranstehenden Ansprüche, **dadurch gekennzeichnet, dass** die Führungen (32) in die Seitenwände (34) der Karosserie (12) integriert sind.

4. Windschottanlage nach Anspruch 3, **dadurch gekennzeichnet, dass** die Führungen (32) durch Innenverkleidungen (130) der Seitenwände (34) abgedeckt und über einen Schlitz (132) in diesen zugänglich sind.

5. Windschottanlage nach einem der voranstehenden Ansprüche, **dadurch gekennzeichnet, dass** die Tragstrebe (72) durch einen Antrieb (60) zwischen der eingefahrenen und der ausgefahrenen Stellung längs der Führungen (32) bewegbar ist.

6. Windschottanlage nach Anspruch 5, **dadurch gekennzeichnet, dass** der Antrieb als Schubantrieb (60) ausgebildet ist und ein längs einer Führungsbahn (68) geführtes und längs dieser bewegbares Schubglied (64) sowie eine auf dieses Schubglied (64) wirkende Vorschubeinheit (62) umfasst.

7. Windschottanlage nach Anspruch 6, **dadurch gekennzeichnet, dass** das Schubglied (64) mindestens einen in Richtung seiner Längserstreckung (66) verlaufenden Schubstrang (102, 104) aufweist.

8. Windschottanlage nach einem der Ansprüche 6 oder 7, **dadurch gekennzeichnet, dass** das Schubglied (64) einen ersten und einen zweiten, jeweils längs einer Führungsbahn (86, 88) geführten Schubstrang (102, 104) aufweist.

9. Windschottanlage nach Anspruch 8, **dadurch gekennzeichnet, dass** die Schubstränge (102, 104) des Schubglieds (64) miteinander gekoppelt sind.

10. Windschottanlage nach Anspruch 9, **dadurch gekennzeichnet, dass** die Schubstränge (102, 104) durch ein an einer Stelle vorgesehenes Kopplungselement (106) miteinander gekoppelt sind.

11. Windschottanlage nach einem der voranstehenden Ansprüche, **dadurch gekennzeichnet, dass** die Führungsstreben (36) durch einen Antrieb (60, 236) aus den Seitenwänden (34) über die Gürtellinie (38) der Karosserie (12) nach oben herausbewegbar sind.

12. Windschottanlage nach einem der voranstehenden Ansprüche, **dadurch gekennzeichnet, dass** eine Halteeinrichtung (180) vorgesehen ist, welche ein einem Mitbewegen der Führungsstrebe (36) diese an dem die Führungsstrebe (36) bewegenden Schubstrang (104) fixiert.

13. Windschottanlage nach Anspruch 12, **dadurch gekennzeichnet, dass** die Halteeinrichtung (180) an der Führungsstrebe (36) angeordnet und entsprechend der Position der Führungsstrebe (36) relativ zur Seitenwand (34) steuerbar ist.

14. Windschottanlage nach einem der voranstehenden Ansprüche, **dadurch gekennzeichnet, dass** eine Endeinzugseinrichtung (210) vorgesehen ist, mit welcher die Führungsstrebe (36) in ihrer in die Seitenwand (34) hineinbewegten Endstellung relativ zur Seitenwand (34) festlegbar ist.

15. Windschottanlage nach Anspruch 14, **dadurch gekennzeichnet, dass** die Endeinzugseinrichtung (210) so ausgebildet ist, dass sie kurz vor Erreichen der in die Seitenwand (34) hineinbewegten Endstellung der Führungsstrebe (36) mit dieser eine formschlüssige Verbindung herstellt, und die Führungsstrebe (36) in die Endstellung bewegt und in dieser hält.

16. Cabriofahrzeug, **dadurch gekennzeichnet, dass** dieses mit einer Windschottanlage nach einem der voranstehenden Ansprüche versehen ist.
